# EUROPÄISCHE PATENTSCHRIFT

(11) **EP 0 686 232 B1**
(45) Veröffentlichungstag und Bekanntmachung des Hinweises auf die Patenterteilung: **10.09.1997**
(21) Anmeldenummer: 94906928.0
(22) Anmeldetag: 09.02.1994
(51) Int. Cl.: F02D 41/14, G01N 27/417, G01N 27/406

(54) **KOMBINATION VON LAMBDA-SONDEN**
COMBINATION OF LAMBDA SENSORS
COMBINAISON DE SONDES LAMBDA

(30) Priorität: 26.02.1993 DE 4306035; 23.06.1993 DE 4320881
(43) Veröffentlichungstag der Anmeldung: 13.12.1995
(73) Patentinhaber: ROTH-Technik GmbH & Co. Forschung für Automobil- und Umwelttechnik, 76571 Gaggenau (DE)
(72) Erfinder: HÄFELE, Edelbert, D-76228 Karlsruhe (DE); SCHÖNAUER, Ulrich, D-76131 Karlsruhe (DE); HUBER, Jörg, D-76448 Durmersheim (DE)
(74) Vertreter: Säger, Manfred, Dipl.-Ing.
(86) Internationale Anmeldenummer: EP9400370
(87) Internationale Veröffentlichungsnummer: WO9419593

(56) Entgegenhaltungen:
- FR-A- 2 216 016
- GB-A- 2 054 211
- PATENT ABSTRACTS OF JAPAN vol. 7, no. 59 (M-199)(1204) 11. März 1983 & JP,A,57 203 843 (MITSUBISHI DENKI K.K.) 14. Dezember 1982
- PATENT ABSTRACTS OF JAPAN vol. 10, no. 257 (M-513)(2313) 3. September 1986 & JP,A,61 083 466 (SUZUKI MOTOR CO LTD) 28. April 1986
- PATENT ABSTRACTS OF JAPAN vol. 10, no. 358 (P-522)2. Dezember 1986 & JP,A,61 155 751 (TOYOTA CENTRAL RES & DEV LAB) 15. Juli 1986
- PATENT ABSTRACTS OF JAPAN vol. 10, no. 97 (P-446)15. April 1986 & JP,A,60 231 159 (NISSAN JIDOSHA KK) 16. November 1985

## Beschreibung

Die Erfindung betrifft eine Kombination einer beheizten Lambda-Sonde mit sprungförmiger bzw. binärer Sensor-Charakteristik und einer weiteren beheizten Lambda-Sonde für die Bestimmung des Lambda-Wertes in einem Gasgemisch, beispielsweise im Abgas, vorzugsweise von Verbrennungsmotoren gemäß dem Oberbegriff des Hauptanspruches. (VERGL. US-A-466/234).

Lambda-Sonden sind ansich bekannt (DE-A 41 09 560). Diese arbeiten als binäre Lambda-Sonden und bestimmen, ob der gemessene Wert über- oder unterhalb eines Werts von Lambda gleich 1 liegt.

Nachdem manchmal genauere und differenzierte Aussagen über den Zustandswert eines Systems erforderlich sind, ist es auch bekannt, Kombinationen von zwei Lambda-Sonden zu verwenden. Hierbei sind Kombinationen mit zwei diskreten Lambda-Sonden (DE-A-23 04 622; DE-30 23 429 und JP-Abstracts Suzuki JP-A-61 83 466 sowie JP-Abstracts Mitsubishi Denki) JP-A-57 20 3843 sowie Kombinationen mit zwei auf einem Chip angeordneten Lambda-Sonden (US-A-4 661 234 und JP-A-60-231 159) bekannt. Gemäß den o.g. JP-A-Abstracts wird das Signal binärer λ-Sensoren zur Eichung linearer λ-Sensoren benutzt.

Bei der erstgenannten Gruppe diskreter Sonden wird z.B. eine Mehrheitsentscheidung von mehreren Sensoren durchgeführt (DE-23 04 622). Bei anderen Schaltungen ergibt sich das Problem, daß bestimmte Kurven nicht eindeutig sind (DE-A-30 23 429; Fig. 6), was bedeutet, daß eine bestimmte Ausgangsspannung des Sensors zwei Werten von Lambda zuzuordnen ist. Um diese fehlende Eindeutigkeit zu beseitigen, wird ein Diskriminator in Form einer binären Lambda-Sonde eingeführt, um festzustellen, in welchem Ausgangsbereich sich die Sonde befindet.

Bei der letztgenannten Gruppe von zwei auf einem Substrat angeordneten Sensoren wird ein ähnliches Problem angesprochen (US-A-4 661 234; Fig. 11). Dort ist im mageren Bereich eine Nichteindeutigkeit des Ausgangsstromes gegeben. Um diese zu beseitigen, dient die weitere Lambda-Sonde sowie dazu, hysteresebedingte Einschwing-Vorgänge zu unterdrücken. Im übrigen handelt es sich hierbei auch nicht um eine lineare Lambda-Sonde.

Ferner ist es bekannt, zwei Sensoren auf einem Substrat anzubringen (JP-Patent Abstrac JP-A-60 231 159), wobei der eine mit einem eingeprägtem Strom und der andere mittels einer konstanten Spannung betrieben wird. Diese Anordnung dient dazu, andere Äquivalenzverhältnisse als das theoretische Äquivalenzverhältnis anzuzeigen. Außerdem ergibt sich auch eine Nichteindeutigkeit der beiden Äste der Kurve oberhalb und unterhalb von Lambda gleich 1, ganz abgesehen davon, daß es sich um keine lineare Ausgangscharakteristik handelt.

Schließlich ist eine gattungsgemäße Kombination von Lambda-Sonden gemäß dem Oberbegriff des Hauptanspruches bekannt (Siehe auch JP-Patent Abstracts JP-A-61 155 751). Hier ist nur eine einzige der beiden Sonden auf resistiver Grundlage. Der andere Sensor ist eine Sonde auf der Grundlage sauerstoffionenleitenden Materials. Infolgedessen kann im Sauerstoffüberschuß, also im mageren Bereich gemessen werden. Im fetten Bereich ist aufgrund der Verwendung einer nichtresistiven Sonde eine Messung nicht möglich; lediglich die Tatsache kann festgestellt werden, daß man sich im fetten Bereich mit Sauerstoffdefizit befindet. Hinzu kommt, daß die zweite Sonde nicht dazu dient, eine Korrektur des breitbandigen Signals anhand des binären Signals durchzuführen. Vielmehr ist aufgrund der beim Übergang zwischen mager und zu fett und fett zu mager eine Hysterese vorhanden ist. Hierdurch bedingt ergibt sich ein Einschwingverhalten mit großen Zeitkonstanten, innerhalb derer das Signal völlig ungenau ist. Dieser Fehler wird beim Übergang vom fetten Bereich mit Sauerstoffmangel in den anderen Bereich dadurch unterdrückt, daß die breitbandige Sonde erst nach einer vorgegebenen Zeit nach Überschreitung des Äquivalenzwertes von Lambda gleich 1 zugeschaltet wird.

Der Erfindung liegt die Aufgabe zugrunde, eine Kombination von Lambda-Sonden gemäß dem Oberbegriff des Hauptanspruches so auszugestalten, daß trotz vorhandener Drift die Genauigkeit der gemessenen Werte der Sonde nicht beeinträchtigt wird.

Diese Aufgabe wird bei einer gattungsgemäßen Lambda-Sonde gemäß dem Oberbegriff des Hauptanspruches erfindungsgemäß durch dessen kennzeichnende Merkmale gelöst.

Nach Lehre der Erfindung wird also der binären Lambda-Sonde, welche bei dem Lambda-Wert von 1 einen Widerstandssprung macht, eine zweite, breitbandige Lambda-Sonde in unmittelbare räumliche Nähe auf dem selben Substrat einander zugeordnet. Durch diese Kombination kann die breitbandige Lambda-Sonde mit Hilfe der binären bei einem Wert Lambda = 1 so kalibriert werden, daß die breitbandige Lambda-Sonde bezüglich der Drift kalibriert wird. Sie weist hierbei einen kontinuierlich sich ändernden Widerstand, linear im Bereich von Lambda 0,8-1,2 auf. Infolge der hohen Genauigkeit der Bestimmung des Wertes von Lambda im Bereich um Lambda = 1, kann eine verbesserte Regelung eines Motors, insbesondere auch bei dynamischen Betriebszuständen erreicht werden. Die geforderte hohe Genauigkeit in einem kleinen Meßbereich kann mit Hilfe des erfindungsgemäß zusätzlich verwendeten Lambda-Sensors erzielt werden. Dabei sind auf einem Sensorelement sauerstoffsensitive Materialien einmal mit sprungförmiger und einmal breitbandiger Sensorcharakteristik aufgebracht, vorzugsweise in unmittelbarer räumlicher Nähe zueinander auch auf einem gemeinsamen Substrat, welches dieselbe Temperatur aufweist. Über das sprungförmige Signal kann in jedem Betriebszustand die vorzugsweise temperaturgeregelte Breitbandsonde exakt kalibriert werden. Darüberhinaus können auch sehr schnelle Temperaturschwankungen im Abgas erfaßt werden, welche üblicherweise eine Verfälschung des Sensorsignals bedingen, wenn sich beide Sensor-Elemente auf einem gemeinsamen Substrat mit gleicher Temperatur befinden, welches in an sich bekannter Weise beheizt ist. Außerdem wird infolge der unmittelbaren räumlichen Nähe zueinander auch in etwa das ansonsten über den Strömungsbereich unterschiedlich konzentrierte Gasgemisch praktisch identische Gas gemessen. Ebenso ist es möglich, die Variation der Arbeitstemperatur auf dem gemeinsamen Substrat zur Kompensation der Drift herzunehmen.

Eine zweckmäßige Ausgestaltung und Weiterbildung der Erfindung ist in dem Unteranspruch gekennzeichnet.

Ein Ausführungsbeispiel der Erfindung wird nachfolgend unter Bezugnahme auf die Zeichnung näher erläutert. In dieser zeigt:
- Figur 1: zwei Lambda-Sonden auf einem Substrat, in Draufsicht;
- Figur 2: das Substrat gemäß Figur 1 in Draufsicht;
- Figuren 3 bis 6: Ersatzwiderstandsschaubilder der Komponenten auf dem Substrat gemäß den Figuren 1 und 2;
- Figur 7: ein Widerstandsschaubild über den Wert Lambda der binären Lambda Sonde und
- Figur 8: ein Widerstandsschaubild über den Wert Lambda der breitbandigen Lambda-Sonde mit einer Kurvenschar.

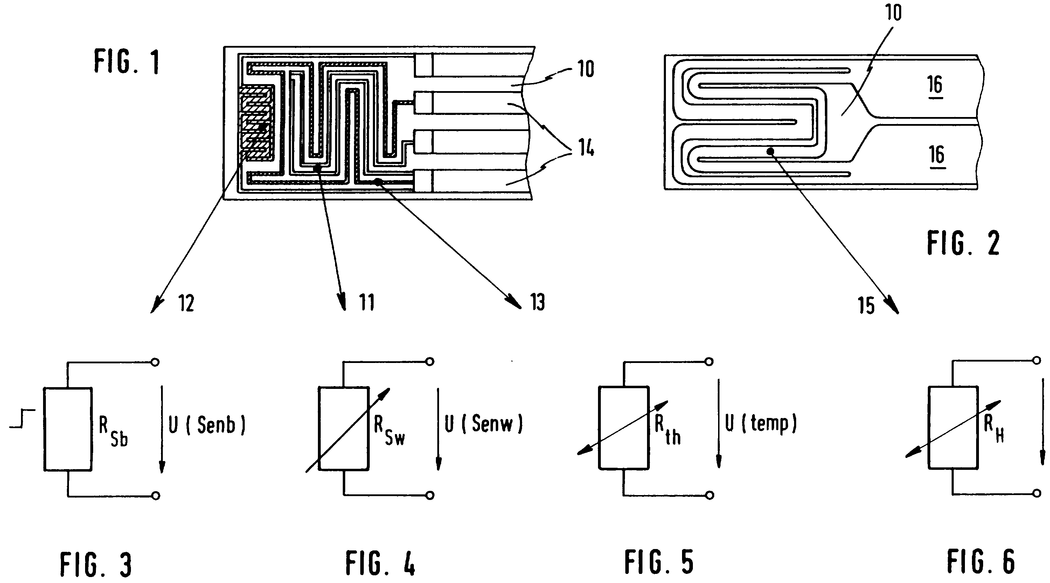

In Figur 1 ist ein insgesamt in schematischer und teilweise abgebrochener Draufsicht dargestelltes Substrat 10 dargestellt. Auf dieses ist in an sich bekannter Weise in Schichttechnik mittels Siebdruck eine erste, breitbandige Lambda-Sonde 11, eine binäre Lambda-Sonde 12 und eine schematisch mit 13 bezeichneten Temperatursensor vorgesehen, die über insgesamt mit 14 bezeichnete Abschlußleitungen angeschlossen sind, welche auch als auf das Substrat aufgebrachte Leiterbahnen, vorzugsweise auch in Dickschichttechnik ausgebildet sind.

Auf der Rückseite (Fig. 2) des Substrates 10 ist eine insgesamt mit 15 bezeichnete Widerstandsheizschicht angebracht, die über zwei Anschlußkontaktleitungen 16 an eine Elektrische Spannungsquelle anschließbar ist.

Hierbei läßt sich das elektrische Verhalten der beiden Lambda-Sonden 11, 12 des Temperatursensors 13 sowie der Sensorheizung 15 als elektrischer Widerstand im Ersatzschaubild, wie in den Figuren 3 bis 6 gezeigt, darstellen.

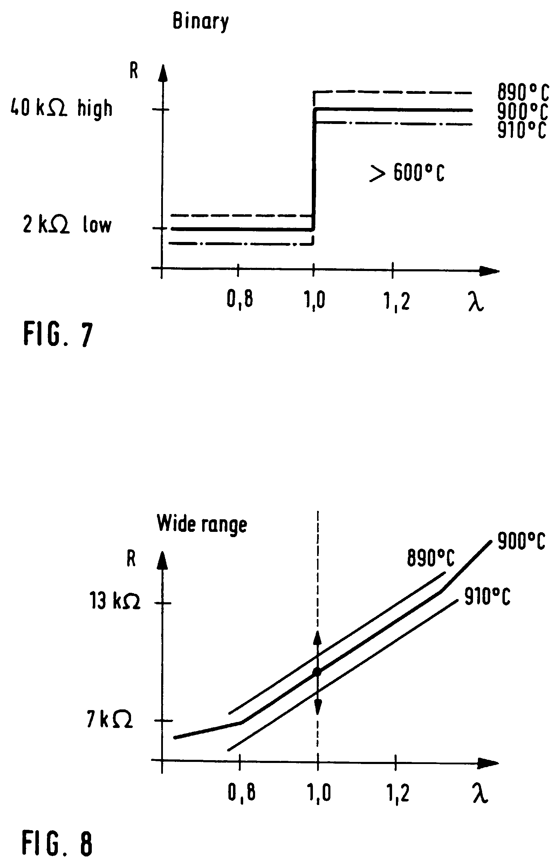

Figur 8 zeigt ferner eine Kurvenschar des elektrischen Widerstandes über dem Wert vom Lambda, bei verschiedenen Betriebstemperaturen, nämlich bei 890°C, 900°C und 910°C. Es ist ersichtlich, daß mit steigender Temperatur auch der Widerstand bei jeweils gleichem Wert von Lambda sinkt. Ferner ist ersichtlich, daß sich die einzelnen Kurven in dem Bereich von o,8 < Lambda < 1,2 etwa linear verhalten.

Demgegenüber ist die binäre sprungartige Lambda-Sonde, deren Widerstandsschaubild in Figur 7 dargestellt ist, sprungartig verändert und bei einer einzigen Betriebstemperatur dargestellt.

## Patentansprüche

1. Kombination einer geheizten, resistiven Lambda-Sonde (12) mit sprungförmiger bzw. binärer Sensorcharakteristik mit einer weiteren Lambda-Sonde (11), die eine breitbandige Sensorcharakteristik für die Bestimmung des Lambda-Wertes in einem Gasgemisch, beispielsweise im Abgas, vorzugsweise von Verbrennungsmotoren aufweist, wobei die beiden Lambda-Sonden in unmittelbarer räumlicher Nähe zueinander auf demselben, gemeinsamen Substrat (10) angeordnet sind und dieses zur Erzielung einer gleichen Temperatur für die beiden Lambda-Sonden (11, 12) mittels einer Widerstandsheizschicht (15) versehen ist,
**dadurch gekennzeichnet**,
daß die weitere Lambda-Sonde (11) mit breitbandiger Sensorcharakteristik zum Erhalt eines Meßergebnisses nicht nur im mageren Bereich (Lambda > 1), sondern auch im fetten Bereich (Lambda < 1) als resistive Sonde ausgebildet ist und eine lineare Sensorcharakteristik im Bereich von Lambda = 0,8 bis 1,2 aufweist und von dem Ausgangssignal der einen Lambda-Sonde (12) mit binärer Sensorcharakterstik kalibriert wird.

2. Kombination nach Anspruch 1, dadurch gekennzeichnet, daß die Lambda-Sonde (1) mit breitbandiger Sensor-Charakteristik von einem Temperatur-Sensor (13) bezüglich der Temperatur kompensiert wird.

## Claims

1. A combination of a heated resistive lambda sensor (12) with a stepped or binary sensor characteristic with a further lambda sensor (11) which has a wide-band sensor characteristic for determining the lambda value in a gas mixture, for example in the exhaust gas, preferably of internal combustion engines, wherein the two lambda sensors are arranged in direct spatial proximity relative to each other on the same common substrate (10) and same is provided to achieve an identical temperature for the two lambda sensors (11, 12) by means of a resistance heating layer (15), characterised in that the further lambda sensor (11) with a wide-band sensor characteristic is in the form of a resistive sensor to obtain a measurement result not only in the leaner range (lambda>1) but also in the rich range (lambda < 1) and has a linear sensor characteristic in the range of lambda = 0.8 to 1.2 and is calibrated by the output signal of the one lambda sensor (12) with a binary sensor characteristic.

2. A combination according to claim 1 characterised in that the lambda sensor (1) with a wide-band sensor characteristic is compensated in respect of temperature by a temperature sensor (13).

## Revendications

1. Combinaison entre une sonde lambda (12) chauffée, résistive, à courbe de détection binaire, par exemple étagée, et une autre sonde lambda (11) qui présente une courbe de détection à bande large, destinée à déterminer la valeur lambda dans un mélange gazeux, par exemple dans le gaz d'échappement de moteurs, de préférence à combustion interne, ces deux sondes lambda étant disposées spatialement à proximité immédiate l'une de l'autre, directement sur un substrat (10) commun, celui-ci étant muni d'une couche à résistance chauffante, dans le but d'obtenir une température égale pour les deux sondes lambda (11, 12), **CARACTERISEE** en ce que, pour obtenir un résultat de mesure non seulement dans la zone faible (lambda < 1), mais aussi dans la zone forte (lambda > 1), la seconde sonde lambda (11), à courbe de détection à bande large, est :
- d'une part, constituée en sonde résistive et présente une courbe de détection linéaire dans la zone où lambda = 0,8 à 1,2, et,
- d'autre part, calibrée par le signal de sortie de la première sonde lambda (12) à courbe de détection binaire.

2. Combinaison selon la revendication 1 **caractérisée** en ce que la sonde lambda (11), à courbe de détection à bande large, est compensée, pour ce qui concerne la température, par un capteur de température (13).
